# EUROPEAN PATENT APPLICATION

(11) **EP 2 518 803 A1**
(43) Date of publication of application: **31.10.2012**
(21) Application number: 10839342.2
(22) Date of filing: 20.12.2010
(51) Int. Cl.: H01M 4/485, C01G 23/00, H01M 4/36

(54) **LITHIUM TITANATE, MANUFACTURING METHOD THEREFOR, SLURRY USED IN SAID MANUFACTURING METHOD, ELECTRODE ACTIVE MATERIAL CONTAINING SAID LITHIUM TITANATE, AND LITHIUM SECONDARY BATTERY USING SAID ELECTRODE ACTIVE MATERIAL**

(30) Priority: 22.12.2009 JP 2009291269
(71) Applicant: Ishihara Sangyo Kaisha, Ltd., Osaka-shi, Osaka 550-0002 (JP)
(72) Inventor: HONMA Masatoshi, Yokkaichi-shi Mie 510-0842 (JP)
(74) Representative: Henkel, Breuer & Partner
(86) International application number: PCT/JP2010/072876
(87) International publication number: WO 2011/078112

(57) **Abstract**

Disclosed is a lithium titanate that, when used as a positive electrode active material in a lithium secondary battery having a metallic lithium negative electrode, provides a discharge capacity at a discharge rate of 30C that is at least 75% of the discharge capacity at a discharge rate of 0.25C. The disclosed lithium titanate can be obtained by drying, and then firing in an inert atmosphere, a slurry that contains, at least, a lithium compound, a titanium compound, a surfactant, and a carbon material. Said lithium titanate is useful as an active material in a lithium secondary battery with excellent battery characteristics, particularly rate characteristics

## Description

### TECHNICAL FIELD

The present invention relates to a lithium titanate excellent in battery properties, particularly rate property, a method for manufacturing the lithium titanate, a slurry used in the manufacturing method, an electrode active material containing the lithium titanate, and a lithium secondary battery using the electrode active material.

### BACKGROUND ART

Lithium secondary batteries, since having a high energy density and being excellent in cycle property, have recently rapidly spread as small batteries for portable device power sources and the like, while they are desired to develop also to large batteries for power industries, automobiles and the like. Electrode active material of these large lithium secondary batteries is demanded to have long-term reliability and high input/output property, and particularly for a negative electrode active material, a lithium titanate excellent in safety and life and excellent also in rate property is promising.

As the lithium titanate, for example, a lithium titanate which is granulated to a spherical secondary particle to improve the packing property and the battery properties is known (Patent Literatures 1 and 2). In order to improve the discharge capacity of a lithium titanate secondary particle, there are known a method for manufacturing a lithium titanate by preheating a solution comprising a lithium compound dispersed therein to 50°C or higher, and adding a crystalline titanium oxide and a titanium compound to thereby prepare the slurry, and a method for manufacturing an electrode by mixing the lithium titanate, a binder and a conductive material (Patent Literature 3), and a method in which a surface of a lithium titanate secondary particle, or a surface of a lithium titanate secondary particle containing a conductive material thereinside is subjected to a carbon vapor deposition by CVD method to improve cycle property (Patent Literature 4).

### CITATION LIST

### PATENT LITERATURE

PATENT LITERATURE 1: JP-2001-192208 A
PATENT LITERATURE 2: JP-2002-211925 A
PATENT LITERATURE 3: JP-2005-239460 A
PATENT LITERATURE 4: JP-2005-158721 A

### SUMMARY OF INVENTION

### TECHNICAL PROBLEM

In consideration of lithium secondary batteries for HEV automobiles and power storage, a large current needs to be taken out in a short time, therefore, the discharge capacity in the time of large-current discharge is a problem. For this reason, technologies of Patent Literatures 1 to 4 are demanded to be further improved in rate property. For example, in the technology of Patent Literature 4, most of carbon vapor deposited is present on the surface and inside the lithium titanate secondary particle in the vicinity of the surface of the secondary particle, and is not present in the core part of the secondary particle, and even if a conductive material is contained inside the secondary particle, the conductive material is not homogeneously dispersed, so desired rate property cannot be attained.

### SOLUTION TO PROBLEM

As a result of exhaustive studies on a method for improving rate property by improvement of an active material itself, the present inventors have found that a lithium titanate comprising carbon, wherein in a case of using the lithium titanate as a positive electrode active material of a lithium secondary battery in which a metallic lithium is used as a negative electrode, the lithium titanate exhibits a discharge capacity of 75% or higher at a discharge rate of 30C with respect to a discharge capacity at a discharge rate of 0.25C.

The present inventors have also found that a lithium titanate excellent in rate property can be obtained by drying a slurry comprising, at least, a lithium compound, a titanium compound, a surfactant and a carbon material, and thereafter firing in an inert atmosphere.

The present inventors have further found that the L value, measured using a spectroscopic colorimeter under the condition of SCE (specular component excluded), of the slurry containing a lithium compound, a titanium compound, a surfactant and a carbon material is 80 or lower, the slurry has a good dispersion state and is suitable for manufacture of a lithium titanate.

The present inventors have further found that an electrode active material comprising the lithium titanate is an excellent battery material.

The present inventors have still further found that a lithium secondary battery using the electrode active material for a positive electrode or a negative electrode has excellent rate property.

### ADVANTAGEOUS EFFECTS OF INVENTION

Use of the lithium titanate according to the present invention as an electrode active material provides a lithium secondary battery having excellent rate property.

### BRIEF DESCRIPTION OF DRAWING

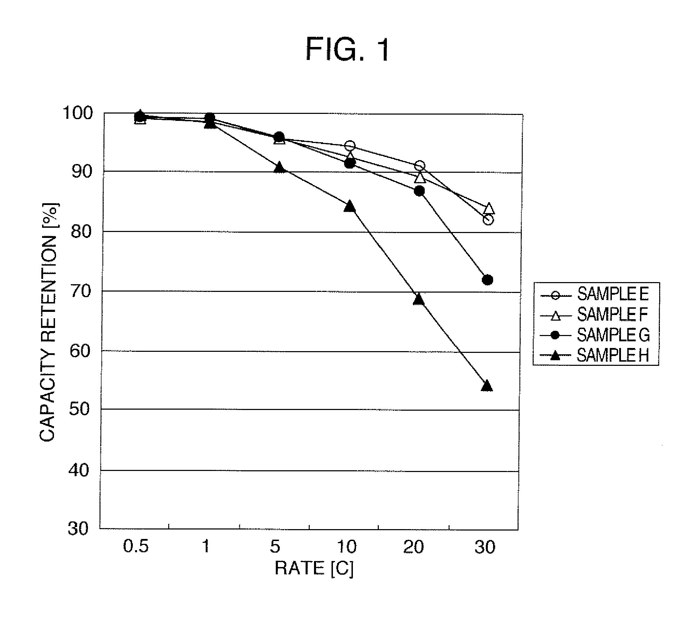

[Fig. 1] Fig. 1 is a diagram showing capacity retention at each discharge rate.

### DESCRIPTION OF EMBODIMENTS

The lithium titanate according to the present invention comprises carbon, and is useful for an electrode material of a lithium secondary battery. Specifically, in the case where the lithium titanate comprising carbon according to the present invention is used as a positive electrode active material in a lithium secondary battery using a metallic lithium as a negative electrode, the lithium titanate exhibits a discharge capacity of 75% or higher at a discharge rate of 30C with respect to a discharge capacity at a discharge rate of 0.25C. The discharge capacity at 30C is preferably 80% or higher with respect to the discharge capacity at 0.25C, as in Examples 3 and 4 described later. The each discharge capacity can be measured by using a coin cell for evaluation prepared by the same procedure as in Examples 4 to 6 described later, and holding the temperature of the measurement environment at 25°C and setting the voltage in the range of 1 to 3 V

The lithium titanate is preferably constituted of secondary particles made by aggregate of primary particles, and 90% or more of particles is preferably the secondary particles. An example of such a lithium titanate includes a lithium titanate in which the great part, preferably 90% or more of the primary particles is represented by a composition formula LiₓTi_{y}O₄. Values of x and y in the general formula are preferably in the range of 0.5 to 2 in terms of x/y, and the lithium titanate is especially preferably of a spinel type represented by a composition formula Li_{4/3}Ti_{5/3}O₄ (Li₄Ti₅O₁₂).

The secondary particle of the lithium titanate is in the state that primary particles firmly bond, and is not a secondary particle in which primary particles aggregate by the interaction between the particles such as the van der Waals force, or are mechanically compacted, and does not easily collapse by usual mechanical crushing used industrially and remains as the secondary particle. Meanwhile, carbon contained in the lithium titanate is present mainly inside the secondary particle. The carbon is not present locally in a part of the secondary particle, but is highly possibly distributed uniformly inside the secondary particle, and is distributed not only in pores penetrating to the surface of the secondary particle but also in pores not penetrating to the surface of the secondary particle. More specifically, the carbon is conceivably interposed uniformly between a large number of primary particles constituting the secondary particle. Since such a lithium titanate comprising carbon forms good conductive paths between the primary particles, the conductivity is improved more than in a case where the same amount of carbon is treated on the surface of a secondary particle, and a case where carbon is added as a conductive material when an electrode is prepared. The improvement of the conductivity in such a manner conceivably alleviates a decrease in the capacity retention even at a large current as described later.

The lithium titanate can be obtained by the method according to the present invention as described below.

The present invention comprises drying a slurry comprising, at least, a lithium compound, a titanium compound, a surfactant and a carbon material, and thereafter firing in an inert atmosphere.

Specifically, first, starting materials of at least a titanium compound, a lithium compound and the like, a surfactant and a carbon material are added to a medium liquid to thereby prepare a slurry comprising these materials. The order of adding each starting material to the medium liquid has no limitation, but a lithium compound is previously added to the medium liquid, and a titanium compound is then added to prepare a slurry of a lithium titanate precursor, and thereafter, a surfactant and a carbon material are added, it is preferable because the viscosity rise and the gelling of a slurry hardly occur. "A lithium titanate precursor" used in the present application refers to a substance in the stage before the formation of lithium titanate, and for example, the slurry comprising a titanium compound and a lithium compound is a slurry of a lithium titanate precursor.

If the concentration of titanium components in a slurry is in the range of 50 to 300 g/L in terms of TiO₂, it is preferable because being industrially advantageous; and if the concentration is in the range of 80 to 250 g/L, it is more preferable. The concentration of lithium components can be a concentration to provide a lithium titanate having a desired composition formula based on the concentration of the titanium components.

As the medium liquid, water, an organic solvent such as an alcohol, or a mixture thereof can be used; and industrially, water or an aqueous medium liquid containing water as a main component is preferably used. The temperature of a medium liquid comprising a lithium compound is in the range of room temperature to 100°C, it is preferable because the reaction of a titanium compound and the lithium compound progresses at the preparation stage of a slurry, and a lithium titanate is easily obtained at firing.

As the lithium compound, in the case where the reaction is carried out in water or an aqueous medium liquid containing water as a main component, a water-soluble lithium compound is preferably used such as lithium hydroxide, lithium carbonate, lithium nitrate or lithium sulfate. Above all, lithium hydroxide, which is highly reactive, is preferable.

As the titanium compound, there can be used a titanic acid compound such as a metatitanic acid represented by TiO(OH)₂ or TiO₂·H₂O, an orthotitanic acid represented by Ti(OH)₄ or TiO₂·2H₂O, a titanium oxide (rutile type, anatase type, brukite type, bronze type or the like), preferably a crystalline titanium oxide of rutile, anatase or brukite type, or a mixture thereof The crystalline titanium oxide may be, in addition to a crystalline titanium oxide exhibiting an X-ray diffraction pattern having diffraction peaks from a single crystal structure, for example, a crystalline titanium oxide having diffraction peaks from a plurality of crystal structures such as ones having diffraction peaks of anatase type and of rutile type. Further as the titanium compound, other than an inorganic one, an organic one such as a titanium alkoxide may be used.

The carbon material includes carbon black, carbon nanotubes, carbon nanohorns, amorphous carbon, carbon fibers, natural graphite, artificial graphite, active carbon and mesoporous carbon, and composite materials thereof may be used. As the carbon material, carbon black is preferable; and as the carbon black, Ketjen Black and acetylene black are more preferable, and acetylene black is especially preferable. Acetylene black, since the secondary agglomerate is formed in a long chain, conceivably easily forms a conductive network in the secondary particle of a lithium titanate.

By drying a slurry containing a lithium titanate precursor, and a carbon material and a surfactant, a high bulk volume of the carbon material can be suppressed. In the case where a carbon-containing lithium titanate obtained by firing the precursor thus prepared is used as an electrode active material, since the density of the electrode active material in an electrode can be raised, making a lithium secondary battery of a high capacity can be anticipated.

In a slurry added with a surfactant, the dispersion of the carbon material more easily progresses than in a slurry added with no surfactant, and the slurry added with a surfactant is preferable in terms of the work efficiency such as being capable of eliminating a mechanical crushing step using bead mill or the like. A lithium titanate obtained by using a slurry in which a carbon material is dispersed using a surfactant can more easily disperse the carbon material, and gives carbon more easily interposed between a large number of primary particles constituting secondary particles than a lithium titanate obtained by using a slurry in which a carbon material is dispersed using no surfactant.

As the surfactant, there can be used a well-known (1) anionic based surfactant, (2) cationic based surfactant, (3) amphoteric surfactant, (4) nonionic based surfactant, or the like.

(1) The anionic based surfactant includes (A) carboxylates : for example, (a) higher carboxylates (RCOOM), (b) alkyl ether carboxylates (RO(EtO)ₙCOOM), (c) salts of polycondensated substances of a higher carboxylic acid and an amino acid (N-acyl-N-methylglycine, N-acyl-N-methyl-β-alanine, N-acylglutamic acid and the like), and the like), (d) salts of acrylic acid based and maleic acid based polymers (polyacrylates [-CH₂CH(COOM)-]ₙ), acrylate-acrylamide copolymers ([CH₂CH(COOM)]ₙ-[CH₂CH(CONH₂)]ₘ), acrylic acid-maleate copolymers ([CH₂CH(COOH)]ₙ-[CH₂CH(COOM)CH(COOM)]ₘ), ethylene-maleate copolymers ([Et]ₙ-[CH(COOM)CH(COOM)]ₘ), olefin-maleate copolymers ([CH₂CH(R)]ₙ-[CH(COOM)CH(COOM)]ₘ), styrene-maleate copolymers ([Et(C₆H₅)]ₙ-[CH(COOM)CH(COOM)]ₙ, and the like), and the like, (B) sulfates: for example, (a) alkylsulfates (ROSO₃M), (b) alkyl ether sulfates (RO(EtO)ₙSO₃M), (c) aryl ether sulfates (ArO(EtO)ₙSO₃M), (d) sulfated oils (Turkey red oil, sulfated olive oil and the like), (e) sulfated olefins (R(CH₃)CHOSO₃M), (f) alkylamido sulfates (RCONH-R'-OSO₃M, RCONR'-R"-OSO₃M and the like), and the like, (C) sulfonates : for example, (a) alkylsulfonates (RSO₃M)ₘ, (b) arylsulfonates (alkylbenzene sulfonates (R(C₆H₄)SO₃M), alkylnaphthalenesulfonates (R(C₁₀H₈)SO₃M) and the like), (c) sulfocarboxylates (ROOC-R'-SO₃M, ROOC-CH(CH₂COOR')-SO₃M and the like), (d) α-olefin sulfonates (R-C=C-R'-SO₃M, R-CH₂CHOH-R'-SO₃M and the like), (e) alkylamidosulfonates (RCONH-R'-SO₃M, RCONR'-R"-SO₃M and the like), (f) polystyrenesulfonates ([CH₂CH(C₆H₄)(SO₃M)]ₙ), (g) naphthalenesulfonate -formalin polycondensed substances ([CH₂-(C₁₀H₈)]ₙ), and the like, and (D) phosphates : for example, (a) alkylphosphates (ROPO₃M₂, (RO)₂PO₂M and the like), (b) alkyl ether phosphates (RO(EtO)ₙPO₃M₂, (RO(EtO)ₙ)₂PO₂M and the like), (c) aryl ether phosphates (ArO(EtO)ₙPO₃M₂, (ArO(EtO)ₙ)₂PO₂M and the like), and the like.

(2) The cationic based surfactant includes (A) amine salts: for example, alkylamine salts (RH₂NX, RR'HNX, RR'R"NX), and the like, and (B) quarternary ammonium salts: for example, (a) quarternary ammonium salts of alkylamines ([RN(CH₃)₃]⁺X⁻), [RR'N(CH₃)₂]⁺X⁻ and the like), (b) aromatic quarternary ammonium salts ([R₃N(CH₂Ar)]⁺X⁻, [RR'N(CH₂Ar)₂]⁺X⁻ and the like), and (c) heterocyclic quarternary ammonium salts (pyridinium salts, imidazolinium salts, polyvinylimidazoline and the like).

(3) The amphoteric surfactant includes (A) betaine types: for example, (a) carboxylate type betaines ((RR'R"N⁺)R"'COO⁻), (b) sulfonate type betaines ((RR'R''N⁺)R"'SO₃⁻), (c) sulfate type betaines ((RR'R"N⁺)R"'OSO₃⁻), and the like, (B) amino acid types: for example, RNH-R'-COOH, (C) alkylamine oxides: for example, RR'R"N⁺O⁻, and (D) nitrogen-containing heterocyclic types: for example, imidazolium betaine.

(4) The nonionic based surfactant includes (A) ether types: for example, (a) polyoxyethylene alkyl ethers (RO(CH₂CH₂O)ₙH), (b) polyoxyethylene aryl ethers (ArO(CH₂CH₂O)ₙH), (c) alkylaryl formaldehyde condensation polyoxyethylene ethers (ArO[EtO]ₙ-[CH₂-ArO(EtO)ₙ]ₘ-H), (d) polyoxyethylene polyoxyethylene block copolymers (HO-[EtO]ₗ-[CH(CH₃)CH₂O]ₙ-[EtO]ₘ-H), (e) polyoxyethylene polyoxypropyl alkyl ethers (RO-[CH(CH₃)CH₂O]ₘ-[EtO]ₙ-H), and the like, (B) ether ester types: for example, polyoxyethylene ethers of glycerol esters ([CH₂COOR]-[CHO(EtO)ₙH]-[CH₂O(EtO)ₙH]), polyoxyethylene ethers of sorbitan esters, polyoxyethylene ethers of sorbitol esters, and the like, (C) ester types: for example, (a) polyethylene glycol carboxylates (RCOO(EtO)ₙH), (b) glycerol esters ((CH₂COOR)-(CHOH)-(CH₂OH)), (c) polyglycerol esters (CH₂(OR)CH(OR)-O-[CH₂CH(OR)CH₂]ₙ-O-(OR)CH(OR)CH₂), (d) sorbitan esters, (e) propylene glycol esters (RCOOCH₂CH(CH₃)OH), (f) sucrose esters, and the like, and (D) nitrogen-containing types: for example, (a) carboxylic acid alkanolamides (RCONHR'OH, RCON(R'OH)₂), (b) polyoxyethylene carboxylic amides (RCON-(EtO)ₘH-(EtO)ₙH), (e) polyoxyethylene alkylamines (RNH(EtO)ₗR-(EtO)ₘH-(EtO)ₙH, (f) polyalkylene polyamines ([-R-N(R')-]ₙ), (g) polyacrylamides ([-CH₂CH(CONH₂)-]ₙ), and the like.

In the above chemical formulae. R, R', R" and R"' denote the same or different alkyl groups; M denotes Na, K, Ca, H, triethanolamine or the like; and X denotes Cl, Br, I, or the like. As the surfactant, nonionic ones are preferable; among the nonionic ones, polyoxyethylene alkylphenyl ethers and the like are more preferable; and polyoxyethylene alkyl ethers (n = 10 to 15, HLB = 13 to 14) are especially preferable. Here, HLB refers to a value representing a degree of the affinity of a surfactant for water and oil.

A surfactant used in the present invention refers to a compound having a function of dispersing a carbon material in a medium liquid, and includes also compounds commonly called dispersants and humectants. Specific products include DISPERBYK-183, DISPERBYK-184, DISPERBYK-185, DISPERBYK-190, DISPERBYK-191, DISPERBYK-192, DISPERBYK-193, DISPERBYK-194, DISPERBYK-2010, DISPERBYK-2015, DISPERBYK-2090, DISPERBYK-2091, DISPERBYK-2096, and the like (hitherto, BYK Japan KK, DISPERBYK is Registered Trademark), and Emulgen 104P, Emulgen 105, Emulgen 106, Emulgen 108, Emulgen 109P, Emulgen 120, Emulgen 123P, Emulgen 147, Emulgen 150, Emulgen 210P, Emulgen 220, Emulgen 306P, Emulgen 320P, Emulgen 350, Emulgen 404, Emulgen 408, Emulgen 409PV, Emulgen 420, Emulgen 430, Emulgen 705, Emulgen 707, Emulgen 709, and the like (hitherto, Kao Corp.).

The addition amount of a surfactant is preferably 0.25% by weight or more with respect to the solid content of a slurry. In the case where the addition amount of a surfactant is less than 0.25% by weight with respect to the solid content of a slurry, the dispersion of a carbon material in the slurry is liable to become insufficient. Since the case where the addition amount of a surfactant is insufficient gives a marble-like slurry with white and black mixed, the case can be visually confirmed. The stirring condition and the judgment of the dispersion state are as described below. The addition amount of a surfactant is preferably 0.25% by weight to 4.0% by weight, more preferably 0.50% by weight to 2.0% by weight, and still more preferably 0.50% by weight to 1.0% by weight. The addition of an amount (for example, about 1.0% by weight) of a surfactant abundant for dispersion of a carbon material rather than the addition of a necessary minimum amount thereof is preferable from the viewpoint that the time taken for dispersion can be shortened and the viewpoint of rate property of a lithium titanate obtained by firing. In the case where the addition amount of a surfactant is more than 4% by weight, the amount of the surfactant remaining in a precursor powder after dry granulation becomes large, and there arises a risk that the carbon content in the powder after firing cannot be regulated, which case is therefore not preferable.

### (Stirring condition)

A Three-One Motor BL600 stirrer (made by Shinto Scientific Co., Ltd.) is installed with a stirring rod with two Teflon® blades (40 mm), and a slurry is stirred at 200 rpm for 5 min.

### (Judgment of the dispersion state)

The slurry is allowed to stand for 5 min after the stirring, then the sufficiency of the dispersed state is judged.

The case where the amount of a surfactant is insufficient can be confirmed visually since a part of a carbon material not dispersed in the slurry stays on the slurry surface and makes a marble-like slurry with white and black mixed.

Examples of a method for adding a carbon material include a method of adding a powdery carbon material as it is to a slurry of a lithium titanate precursor, and a method in which a slurry containing a carbon material and a surfactant is previously prepared, and added to a slurry of a lithium titanate precursor. Among the above methods, a method of adding a powdery carbon material to a lithium titanate precursor is industrially advantageously preferable because the manufacture step can be simplified, and for other reasons.

The amount of carbon which is contained in a slurry of a lithium titanate precursor as a carbon material is preferably in the range of 0.05 to 30% by weight in terms of C with respect to the solid content of the slurry. The amount is less than this range, a desired conductivity cannot be attained; and more than that, since a non-active material in an electrode increases, the battery capacity decreases, which is not preferable. A more preferable carbon amount is in the range of 0.1 to 15% by weight. The carbon amount can be analyzed by a CHN analysis, a high-frequency combustion method or the like.

The dispersion state of a slurry is measured by the color difference (L, a, b) using a spectroscopic colorimeter. Specifically, the dispersion state is measured by using SD5000, made by Nippon Denshoku Industries Co., Ltd., as a spectroscopic colorimeter under the conditions of a light source of C, an irradiation angle of 2°, reflection light in SCE (secular component excluded) and a measurement diameter of 28 mm and putting the slurry in a round cell (diameter: 28 mm, height: 14 mm).

A slurry in which a lithium compound and a titanium compound are dispersed is white. By contrast, the slurry according to the present invention containing a lithium compound, a titanium compound, a surfactant and a carbon material is gray due to that the carbon material which is black is well dispersed due to the presence of the surfactant. Therefore, the L value is lower than that of a white slurry containing no carbon material added therein, and becomes 80 or lower. The L value is preferably 75 or lower, in which the addition amount of a carbon material and the dispersion state thereof are better, more preferably 70 or lower, and still more preferably 65 or lower.

A carbon material is added to and stirred with a white slurry in which a lithium compound and a titanium compound are dispersed, without using a surfactant, the slurry becomes marble-like with white and black mixed. When the slurry is allowed to stand for a while, the slurry separates into upper and lower parts, and the upper part becomes black and the lower part becomes white. When the slurry is put in a measurement cell of the spectroscopic colorimeter described above, a lower part of the cell becomes white. In the measurement condition described above, since light is incident from the lower part side of the cell, the L value of the white part is measured. Therefore, the L value becomes higher than that of the gray slurry according to the present invention.

As described above, the case where the L value is higher than 80 indicates that a slurry concerned contains no carbon material or a low concentration thereof, or the carbon material is separated from the slurry and insufficiently dispersed.

The slurry is dried and thereafter fired to thereby obtain a lithium titanate comprising carbon. A drying method usable is a well-known method, and examples thereof include a method of spray drying a slurry, and a method of separating a solid-liquid of a slurry and drying the solid content of the slurry.

In drying, dry granulation is preferable. Examples of the dry granulation method include (A) a method of spray drying a slurry to granulate the slurry into secondary particles, and (B) a method of solid-liquid separating a slurry and drying and thereafter crushing the solid content of the slurry to obtain secondary particles of desired size. Particularly the (A) method is preferable because the control of the particle diameter is easy; spherical secondary particles can easily be obtained; and carbon is easily interposed between a large number of primary particles constituting the secondary particle. A spray drier used in the spray drying is suitably selected from a disc system, a pressure nozzle system, a two-fluid nozzle system, a four-fluid nozzle system or the like according to the properties of a slurry and the processing capability. The control of the secondary particle diameter can be carried out by controlling the size of liquid droplets sprayed, for example, by regulating the slid content concentration of a slurry, or in the disc system, regulating the rotation frequency of the disc, or in the pressure nozzle system, the two-fluid nozzle system, the four-fluid nozzle system or the like, regulating the spray pressure and the nozzle diameter and the flow volume of each fluid. The properties such as the concentration and the viscosity of a slurry are suitably established according to the capability of the spray drier.

In the case where the viscosity of a slurry is too low to granulate the slurry, and in order to make the control of the particle diameter easier, an organic binder may be used. Examples of the organic binder to be used include (1) vinylic compounds (polyvinyl alcohol, polyvinylpyrrolidone and the like), (2) cellulosic compounds (hydroxyethylcellulose, carboxymethylcellulose, methylcellulose, ethylcellulose and the like), (3) proteinic compounds (gelatin, gum arabic, casein, soda caseinate, ammonium caseinate and the like), (4) acrylic acid-based compounds (sodium polyacrylate, ammonium polyacrylate and the like), (5) natural polymeric compounds (starch, dextrin, agar, sodium alginate and the like), and (6) synthetic polymeric compounds (polyethylene glycol and the like), and the like, and at least one selected from these can be used. Above all, ones containing no inorganic component such as sodium are more preferable because of being easily decomposed and volatilized.

The firing temperature differs depending on the firing atmosphere and the like, but may be 550°C or higher in most cases in order to produce lithium titanate, and is preferably 1,000°C or lower in order to prevent sintering between secondary particles. The firing temperature is more preferably in the range of 550 to 850°C, and still more preferably in the range of 650 to 850°C. The firing atmosphere is preferably an inert atmosphere such as a nitrogen atmosphere. After the firing, if secondary particles of a lithium titanate obtained are sintered and agglomerated, the agglomeration may be crushed using a flake crusher, a hammer mill, a pin mill, a bantum mill, a jet mill or the like according to needs.

Then, the present invention is an electrode active material, which comprises the lithium titanate according to the present invention described above. The present invention is further a lithium secondary battery, which uses an electrode comprising the electrode active material. The lithium secondary battery comprises an electrode, a counter electrode, a separator, and an electrolyte solution; and the electrode is obtained by adding a conductive material and a binder to the electrode active material, and suitably molding or coating the mixture. Examples of the conductive material include conductive auxiliary agents such as carbon black, acetylene black and Ketjen Black; and examples of the binder include fluororesins such as polytetrafluoroethylene, polyfluorovinylidene and fluororubbers, styrene-butadiene rubbers, and water-soluble resins such as carboxymethylcelluloses and polyacrylic acids. In the case of the lithium battery, the electrode active material is used for the positive electrode, and as the counter electrode, there can be used a metallic lithium, a lithium alloy or the like, or a carbon-containing substance such as graphite. Alternatively, the electrode active material is used for the negative electrode, and as the positive electrode, there can be used a lithium-transition metal composite oxide such as a lithium-manganese composite oxide, a lithium-cobalt composite oxide, a lithium-nickel composite oxide, a lithium-cobalt-manganese-nickel composite oxide or a lithium-vanadium composite oxide, an olivine type compound such as a lithium-iron-composite phosphoric acid compound, and the like. As the separator, a porous polypropylene film or the like is used in either case; and as the electrolyte solution, there can be used a common material such as solutions in which a lithium salt such as LiPF₆, LiClO₄, LiCF₃SO₃, LiN(CF₃SO₂)₂ or LiBF₄ is dissolved in a solvent such as propylene carbonate, ethylene carbonate, dimethyl carbonate, diethyl carbonate, ethyl methyl carbonate, γ-butyllactone or 1,2-dimethoxyethane.

### EXAMPLES

Examples of the present invention will be described hereinafter, but the present invention is not limited thereto.

### Example 1

### (Preparation of a slurry of a lithium titanate precursor)

100 g of crystalline titanium dioxide particles were added to and dispersed in 340 ml of a 4.5 mol/l lithium hydroxide aqueous solution to thereby obtain a slurry. Then, 50 g in terms of TiO₂ of a water dispersion of a titanic acid compound (orthotitanic acid) was dispersed in the slurry kept at a liquid temperature of 80°C under stirring. 650 ml of water was added to the slurry to thereby obtain Slurry A containing the crystalline titanium oxide, the titanic acid compound and the lithium compound (hereinafter, referred to as a lithium titanate precursor).

### (Preparation of an acetylene black-mixed slurry)

1 g of a nonionic surfactant, a polyoxyethylene lauryl ether (Emulgen 109P, made by Kao Corp., HLB = 13.6), was added to Slurry A containing 98 g of the lithium titanate precursor in terms of lithium titanate. 2 g of an acetylene black powder (Denka Black, made by Denki Kagaku Kogyo K.K.) was gradually added to the slurry under stirring, and then stirred for 1 to 2 hours. Thereby, Slurry B containing the acetylene black, the surfactant and the lithium titanate precursor was obtained. The surfactant added to Slurry B was in 1% by weight with respect to the solid content of Slurry B. Slurry B was grey in which white and black were completely mixed.

### (Firing)

The inlet temperature of a spray drier (made by Okawara Kakoki Co., Ltd.) was adjusted at 190°C and the outlet temperature thereof was at 90°C, and Slurry B was spray dried. A granulated material obtained by the spray drying was fired in a nitrogen atmosphere at 720°C for 3 hours to thereby obtain a powdery Sample A. Sample A was mounted on a measuring sample holder, and set in an X-ray diffractometer, made by Rigaku Corp., "RINT2200", and measured under the conditions of the Cu/Kα radiation and a scan speed of 3.0 °/min. Thereby, it was confirmed that Sample A contained a lithium titanate represented by a composition formula Li₄Ti₅O₁₂, and carbon. Sample A was further analyzed by the CHN method, and it was confirmed that Sample A contained 2% by weight of carbon in terms of C.

### Example 2

### (Preparation of an acetylene black slurry)

2 g of an acetylene black (Denka Black, made by Denki Kagaku Kogyo K.K.) was added to 100 ml of pure water to which 1 g of a nonionic surfactant, a polyoxyethylene lauryl ether (Emulgen 109P, made by Kao Corp., HLB = 13.6), and sufficiently stirred to thereby obtain Slurry C.

### (Preparation of an acetylene black-mixed slurry)

While Slurry A containing 98 g of the lithium titanate precursor in terms of lithium titanate was being stirred, Slurry C containing 1 g of the surfactant and 2 g of the acetylene black were gradually added to the Slurry A, and then stirred for 1 to 2 hours. Thereby, Slurry D containing the acetylene black, the surfactant and the lithium titanate precursor was obtained. The surfactant added to the Slurry D was in 1% by weight with respect to the solid content of Slurry D. Slurry D was grey in which white and black were completely mixed.

### (Firing)

A powder (Sample B) was obtained by spray drying and firing as in Example 1, except for using Slurry D in place of Slurry B. By the same measurement methods as in Example I, it was confirmed that Sample B contained a lithium titanate represented by a composition formula Li₄Ti₅O₁₂, and 2% by weight of carbon in terms ofC.

### Comparative Example 1

While Slurry A containing 98 g of the lithium titanate precursor in terms of lithium titanate was being stirred, 2 g of the acetylene black powder (Denka Black, made by Denki Kagaku Kogyo K.K.) was gradually added to Slurry A, and then stirred for 1 to 2 hours. Then a mixture obtained was further mixed using a bead mill to thereby obtain Slurry E containing the acetylene black and the lithium titanate precursor mixed therein.

### (Firing)

A lithium titanate powder (Sample C) containing 2% by weight of the acetylene black was obtained by spray drying and firing as in Example 1, except for using Slurry E in place of Slurry B. By the same measurement methods as in Example 1, it was confirmed that Sample C contained a lithium titanate represented by a composition formula Li₄Ti₅O₁₂, and 2% by weight of carbon in terms of C.

### Comparative Example 2

### (Firing)

The inlet temperature of a spray drier (made by Okawara Kakoki Co., Ltd.) was adjusted at 190°C and the outlet temperature thereof was at 90°C, and Slurry A was spray dried. A granulated material obtained by the spray drying was fired in a nitrogen atmosphere at 720°C for 3 hours to thereby obtain a lithium titanate powder (Sample D). By the same measurement methods as in Example 1, it was confirmed that Sample D was a lithium titanate represented by a composition formula Li₄Ti₅O₁₂, and contained no carbon.

### Examples 3 and 4

Samples A and B obtained in Examples 1 and 2, respectively, and an acetylene black (Denka Black, made by Denki Kagaku Kogyo K.K.) as a conductive auxiliary agent, and a polyfluorovinylidene resin as a binder were blended and kneaded in a weight ratio of 102 : 1 : 10 (that is, in a weight ratio of the lithium titanate, the acetylene black and the polyfluorovinylidene resin of 100 : 3 : 10). Electrode materials prepared by applying the each obtained mixture on an aluminum foil current collector were dried at 120°C for 10 min. The electrode materials were cut out into a circle of 12 mm in diameter, and pressed at 17 MPa to thereby obtain positive electrodes. The active material weight of the positive electrodes was 3 mg.

The positive electrodes were each vacuum dried at 150°C for 3 hours, and incorporated in a hermetically closable coin-type test cell in a glove box of a dew point of -70°C or lower. As the evaluation cell used was one whose material was of a stainless steel (SUS316) and which had an outer diameter of 20 mm and a height of 3.2 mm. The each positive electrode was placed on a lower can of the evaluation cell; a porous polypropylene film (Cellguard #2400, made by Housen KK) as a separator was put thereon; further thereon, a metallic lithium foil pressure bonded with a copper foil current collector, which was punched out in a 12 mm diameter and had a thickness of 5 mm, as a negative electrode, and a 0.5 mm thick spacer and a spring for thickness adjustment (which were of SUS316) were mounted; from thereabove, as a nonaqueous electrolyte solution, a mixed solution of ethylene carbonate and dimethyl carbonate (1 : 2 in volume ratio) in which LiPF₆ was dissolved in a concentration of 1 mol/l was dropped overflowingly; and an upper can equipped with a polypropylene gasket was covered and the outer peripheral edge was caulked and hermetically closed to thus fabricate evaluation coin cells (Samples E and F, respectively).

### Comparative Example 3

An evaluation coin cell (Sample G) was prepared as in Examples 3 and 4, except for using Sample C in place of Samples A and B.

### Comparative Example 4

An evaluation coin cell (Sample H) was prepared as in Examples 3 and 4, except for using Sample D in place of Samples A and B, and kneading the acetylene black as a conductive auxiliary agent and the polyfluorovinylidene resin as a binder in a weight ratio of 100 : 3 : 10.

### (Evaluation 1 of rate property)

For the evaluation coin cells (Samples E to H) obtained in Examples 3 and 4 and Comparative Examples 3 and 4, the discharge capacities at various amounts of currents were measured and the capacity retention (%) were calculated. The measurement was carried out by holding the measurement environment temperature at 25°C and setting the voltage in the range of 1 to 3V, the charge current at 0.25C and the discharge current in the range of 0.25C to 30C. A capacity retention was determined by obtaining a measurement value of a discharge capacity at 0.25C as X_{0.25} and a measurement value of in the range of 0.5C to 30C as Xₙ, and calculating a value by the expression of (Xₙ/X_{0.25}) × 100. Here, 1C refers to a current value that can be discharged from the full charge to the complete discharge in 1 hour, and in the present evaluation, 0.48 mA corresponded to 1C.

The capacity retention of Samples E to H calculated under the above condition are shown in Table 1.

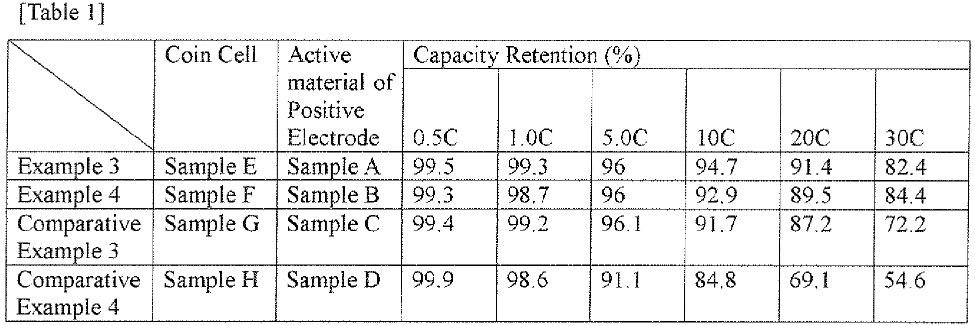

As shown in Fig. 1, in the discharging at a large current of 10C or larger, Samples E and F using a positive electrode obtained using a surfactant had higher capacity retention than Sample G using a positive electrode using no surfactant. Further, as the discharge current became large, differences in the capacity retention between Samples E and F, and Sample G were likely to expand.

As shown in Table 1, Samples E and F obtained using a surfactant had a value of the capacity retention at 30C of 80% or higher. By contrast, Sample G had a capacity retention at 30C of not reaching 75%. It was thereby confirmed that the use of a carbon-containing lithium titanate obtained using a surfactant alleviated a decrease in the capacity at the large current discharging.

In Sample G and Sample H using no surfactant, although Sample G made to contain carbon before firing was superior in rate property to Sample H made not to contain carbon before firing, the rate property of Sample G did not reach the rate properties of Samples E and F.

### Example 5

Sample A obtained in Example 1, the acetylene black as a conductive auxiliary agent, and the polyfluorovinylidene resin as a binder were blended and kneaded in a weight ratio of 102 : 8 : 10 (that is, in a weight ratio of the lithium titanate, the acetylene black and the polyfluorovinylidene resin of 100 : 10 : 10). An electrode material prepared by applying the obtained mixture on an aluminum foil current collector was dried at 120°C for 10 min. The electrode material was cut out into a circle of 12 mm in diameter, and pressed at 17 MPa to thereby obtain a negative electrode. The active material weight of the negative electrode having been cut out into 12 mm in diameter was 3 mg.

Then, lithium manganate (M01Y01, made by Mitsui Mining & Smelting Co., Ltd.), the acetylene black (Denka Black, made by Denki Kagaku Kogyo K.K.) as a conductive auxiliary agent, and the polyfluorovinylidene resin as a binder were blended and kneaded in a weight ratio of the lithium manganate : the acetylene black : the polyfluorovinylidene resin of 100 : 10 : 10. An electrode material prepared by applying the obtained mixture on an aluminum foil current collector was dried at 120°C for 10 min. The electrode material was cut out into a circle of 12 mm in diameter, and pressed at 17 MPa to thereby obtain a positive electrode. The active material weight of the positive electrode was 6 mg.

The positive electrode and the negative electrode were vacuum dried at 150°C for 3 hours, and incorporated in a hermetically closable coin-type test cell in a glove box of a dew point of -70°C or lower. As the evaluation cell used was one whose material was of a stainless steel (SUS316) and which had an outer diameter of 20 mm and a height of 3.2 mm. The positive electrode was placed on a lower can of the evaluation cell; a porous polypropylene film (Cellguard #2400, made by Housen KK) as a separator was put thereon; further thereon, the negative electrode, and a 0.5 mm thick spacer and a spring for thickness adjustment (which were of SUS316) were mounted; from thereabove, as a nonaqueous electrolyte solution, a mixed solution of ethylene carbonate and dimethyl carbonate (1 : 2 in volume ratio) in which LiPF₆ was dissolved in a concentration of 1 mol/l was dropped overflowingly; and an upper can equipped with a polypropylene gasket was covered and the outer peripheral edge was caulked and hermetically closed to thus fabricate an evaluation coin cell (Samples I).

### Comparative Example 5

An evaluation coin cell (Sample J) was prepared as in Example 5, except for using Sample D in place of Sample A, and kneading Sample D, the acetylene black as a conductive auxiliary agent, and the polyfluorovinylidene resin as a binder in a weight ratio of 10 : 10 : 10.

### (Evaluation 2 of rate property)

For the evaluation coin cells (Samples I and J) obtained in Example 5 and Comparative Example 5, the discharge capacities at various amounts of currents were measured and the capacity retention (%) were calculated. The measurement was carried out by setting the voltage in the range of 1.5 to 2.8 V and the discharge current in the range of 0.25C. A capacity retention was determined by obtaining a measurement value of a discharge capacity at 0.25C as X_{0.25}, and a measurement value thereof in the range of 0.5C to 20C as Xₙ, and calculating a value by the expression of (Xₙ/X_{0.25}) × 100. Here, 1C refers to a current value that can be discharged from the full charge to the complete discharge in I hour, and in the present evaluation, 0.48 mA corresponded to 1C.

The capacity retention of Samples I and J calculated under the above condition are shown in Table 2.

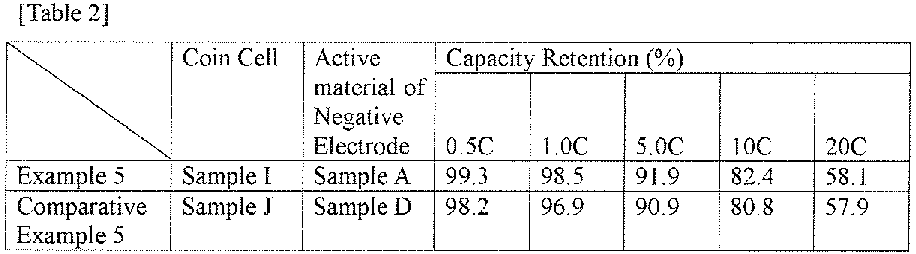

As shown in Table 2, Sample I using a negative electrode using a surfactant and made to contain carbon before firing had a higher capacity retention than Sample G using a negative electrode made not to contain carbon before firing.

### (Preparation of precursor slurries)

### Example 6

Slurry B used in Example 1 was used as a slurry for Example 6.

### Example 7

Slurry F was obtained in the same manner as preparing Slurry B by mixing the acetylene black, the titanium compound and the lithium compound, except for using 2.5 g of a block copolymer (DIPERBYK-190, main component: 40%, made by BYK-Chemie GmbH) having an affinity for a pigment, as a surfactant (dispersant). The surfactant added to Slurry F was 1% by weight with respect to the solid content of Slurry F. Slurry F was grey in which white and black were completely mixed.

### Example 8

Slurry G was obtained in the same manner as preparing Slurry B by mixing the acetylene black, the titanium compound and the lithium compound, except for using 2.5 g of a control-polymerized acrylic copolymer (DIPERBYK-2010, main component: 40%, made by BYK-Chemie GmbH) as a surfactant (dispersant). The surfactant added to Slurry G was 1% by weight with respect to the solid content of Slurry G. Slurry G was grey in which white and black were completely mixed.

### Example 9

Slurry H was obtained in the same manner as preparing Slurry B by mixing the acetylene black, the titanium compound and the lithium compound, except for using 2.5 g of a control-polymerized acrylic copolymer (DIPERBYK-2015, main component: 40%, made by BYK-Chemie GmbH) as a surfactant (dispersant). The surfactant added to Slurry H was 1% by weight with respect to the solid content of Slurry H. Slurry H was grey in which white and black were completely mixed.

### Example 10

Slurry I was obtained in the same manner as preparing Slurry B by mixing the acetylene black, the surfactant and the lithium titanate precursor, except for adjusting the amount of Slurry A so that 95 g of the lithium titanate precursor was contained in terms of lithium titanate, and altering the amount of the acetylene black powder (Denka Black, made by Denki Kagaku Kogyo K.K.) to 5 g. The surfactant added to Slurry I was 1% by weight with respect to the solid content of Slurry I. Slurry I was grey in which white and black were completely mixed.

### Example 11

Slurry J was obtained in the same manner as preparing Slurry B by mixing the acetylene black, the surfactant and the lithium titanate precursor, except for adjusting the amount of Slurry A so that 99 g of the lithium titanate precursor was contained in terms of lithium titanate, and altering the amount of the acetylene black powder (Denka Black, made by Denki Kagaku Kogyo K.K.) to 1 g. The surfactant added to Slurry J was 1% by weight with respect to the solid content of Slurry J. Slurry J was grey in which white and black were completely mixed.

### Example 12

Slurry K was obtained in the same manner as preparing Slurry J by mixing the acetylene black, a surfactant and the lithium titanate precursor, except for using 2.5 g of a block copolymer (DIPERBYK-190, main component: 40%, made by BYK-Chemie GmbH) having an affinity for a pigment, as a surfactant (dispersant). The dispersant added to Slurry K was 1% by weight with respect to the solid content of Slurry K. Slurry K was grey in which white and black were completely mixed.

### Example 13

Slurry L was obtained in the same manner as preparing Slurry J by mixing the acetylene black, a surfactant and the lithium titanate precursor, except for using 2.5 g of a control-polymerized acrylic copolymer (DIPERBYK-2010, main component: 40%, made by BYK-Chemie GmbH) as a surfactant (dispersant). The dispersant added to Slurry L was 1% by weight with respect to the solid content of Slurry L. Slurry L was grey in which white and black were completely mixed.

### Example 14

Slurry M was obtained in the same manner as preparing Slurry J by mixing the acetylene black, a surfactant and the lithium titanate precursor, except for using 2.5 g of a control-polymerized acrylic copolymer (DIPERBYK-2015, main component: 40%, made by BYK-Chemie GmbH) as a surfactant (dispersant). The dispersant added to Slurry M was 1% by weight with respect to the solid content of Slurry M. Slurry M was grey in which white and black were completely mixed.

### Comparative Example 6

Slurry E used in Comparative Example 1 was used as a slurry in Comparative Example 6.

### Comparative Example 7

Slurry A used in Example 1 was used as a slurry in Comparative Example 7.

### Comparative Example 8

Slurry C obtained in Example 2 was used as a slurry in Comparative Example 8.

### (Evaluation of the L value)

As an index of the dispersion state of an acetylene black powder in a slurry, the color difference (L, a, b) was measured using a spectroscopic colorimeter (SD5000, made by Nippon Denshoku Industries Co., Ltd.). The measurement conditions were a light source of C, an irradiation angle of 2°, reflection light in SCE (secular component excluded) and a measurement diameter of 28 mm; and the each slurry obtained in Examples 6 to 9 and Comparative Examples 6 to 8 was put in a round cell (diameter: 28 mm, height: 14 mm) equipped to the colorimeter, and allowed to stand for 5 min, and then measured.

The L value of the each slurry measured under the above conditions is shown in Table 3.

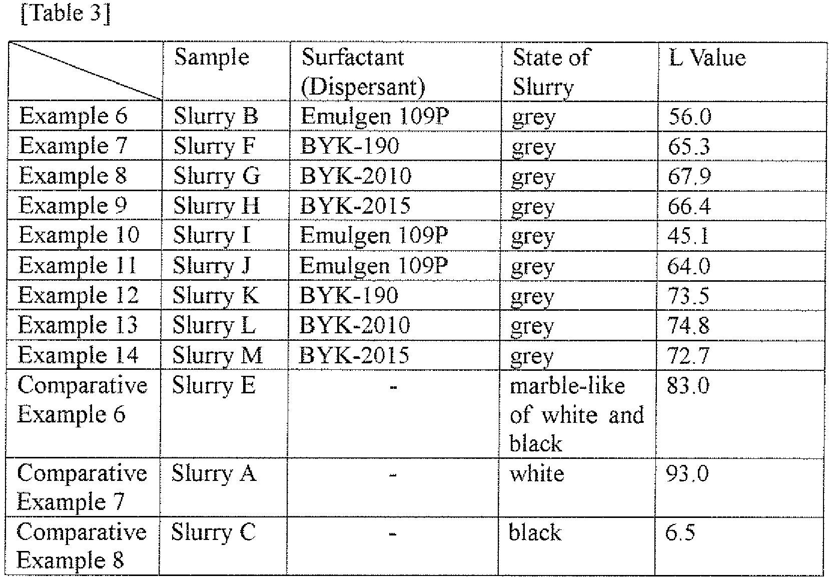

As shown in Table 3, the L values of Slurry B and Slurries F to M using a surfactant were 80 or lower; and the L value of Slurry E using no surfactant was higher than 80. Slurries (F to H and K to M) using BYK-190, BYK-2010 or BYK-2015 as a surfactant (dispersant) had an L value of 80 or lower. The titanium compound concentrations in the slurries used in Examples in Table 3 were 87 to 113 g/L.

The cases where a surfactant, Emulgen 109P, was used in place of the surfactants (dispersants) used in Slurries F to H and K to M had an L value of 65 or lower despite no other conditions were changed. This means that the case where the polyoxyethylene alkyl ether among the nonionic surfactants is used as a surfactant is more preferable in dispersibility.

### INDUSTRIAL APPLICABILITY

The lithium titanate obtained in the present invention is useful as an active material of a lithium secondary battery excellent in battery properties, particularly in rate property.

## Claims

1. A lithium titanate comprising carbon,
wherein in a case of using the lithium titanate as a positive electrode active material of a lithium secondary battery in which a metallic lithium is used as a negative electrode, the lithium titanate exhibits a discharge capacity of 75% or higher at a discharge rate of 30C with respect to a discharge capacity at a discharge rate of 0.25C.

2. The lithium titanate according to claim 1, wherein the lithium titanate comprises a secondary particle, and the carbon is present inside the secondary particle.

3. A method for manufacturing a lithium titanate comprising carbon, comprising drying a slurry comprising, at least, a lithium compound, a titanium compound, a surfactant and a carbon material, and thereafter firing in an inert atmosphere.

4. The method according to claim 3, comprising adding a powdery carbon material to a medium liquid comprising, at least, a lithium compound, a titanium compound and a surfactant, to prepare the slurry.

5. The method according to claim 4, wherein an amount of the surfactant is 0.25% by weight or more with respect to a solid content of the slurry.

6. The method according to claim 5, wherein the drying is dry granulation.

7. The method according to claim 6, wherein the dry granulation is spray drying.

8. The method according to claim 3, wherein the surfactant is a nonionic surfactant.

9. The method according to claim 8, wherein the nonionic surfactant is a polyoxyethylene alkyl ether.

10. A slurry comprising, at least, a lithium compound, a titanium compound, a surfactant and a carbon material.

11. The slurry according to claim 10, wherein the slurry has an L value of 80 or lower which is measured using a spectroscopic colorimeter under condition of SCE (secular component excluded).

12. A lithium titanate precursor comprising a carbon material, being obtained by drying a slurry of claim 10.

13. A lithium titanate comprising a carbon material, being obtained by firing a lithium titanate precursor of claim 12.

14. An electrode active material comprising a lithium titanate of claim 1 or claim 2.

15. A lithium secondary battery, using an electrode active material of claim 14 for a positive electrode or a negative electrode.
